# FASCICULE DE BREVET EUROPEEN

(11) **EP 3 037 013 B1**
(45) Date de publication et mention de la délivrance du brevet: **07.02.2018**
(21) Numéro de dépôt: 15405075.1
(22) Date de dépôt: 22.12.2015
(51) Int. Cl.: A44C 17/04, A44C 27/00

(54) **PIECE DE BIJOUTERIE ET PROCEDE DE SERTISSAGE DE LADITE PIECE DE BIJOUTERIE**
SCHMUCKSTÜCK UND VERFAHREN ZUM FASSEN DIESES SCHMUCKSTÜCKS
PIECE OF JEWELLERY AND METHOD FOR SETTING SAID PIECE OF JEWELLERY

(30) Priorité: 22.12.2014 CH 20112014
(43) Date de publication de la demande: 29.06.2016
(73) Titulaire: Cartier International AG, 6312 Steinhausen (CH)
(72) Inventeur: MOYSE, Romain, 25500 Montlebon (FR); LO, Marie-Adélaïde, 1224 Chêne-Bougeries (CH)
(74) Mandataire: e-Patent SA

(56) Documents cités:
- WO-A1-03/045184
- US-A- 6 105 393
- US-A1- 2003 154 740
- US-B1- 7 546 749

## Description

### Domaine technique

La présente invention concerne une pièce de bijouterie comportant un support et une pluralité de pierres de bijouterie, constituées de pierres taillées, comportant chacune une partie frontale visible, appelée couronne, et une partie dorsale, appelée culasse disposée à l'arrière de ladite couronne et délimitée par rapport à cette couronne par une partie intermédiaire appelée rondiste, lesdites pierres taillées étant couplées chacune par l'intermédiaire d'au moins quatre plots de fixation audit support, et ledit support comportant, pour chacune desdites pierres taillées, au moins quatre réservations qui délimitent une zone de montage de chacune desdites pierres taillées et qui sont agencées pour recevoir respectivement une partie inférieure desdits plots de fixation, lesdits plots de fixation comportant, en outre, une partie supérieure agencée pour maintenir et/ou sertir chacune desdites pierres taillées.

Elle concerne également un procédé de sertissage d'une pièce de bijouterie comportant un support et une pluralité de pierres de bijouterie, constituées de pierres taillées, comportant chacune une partie frontale visible, appelée couronne, et une partie dorsale, appelée culasse disposée à l'arrière de ladite couronne et délimitée par rapport à cette couronne par une partie intermédiaire appelée rondiste, lesdites pierres taillées étant couplées chacune par l'intermédiaire d'au moins quatre plots de fixation audit support, et ledit support comportant, pour chacune desdites pierres taillées, au moins quatre réservations qui délimitent une zone de montage de chacune desdites pierres taillées et qui sont agencées pour recevoir respectivement une partie inférieure desdits plots de fixation, lesdits plots de fixation comportant, en outre, une partie supérieure agencée pour maintenir et/ou sertir chacune desdites pierres taillées, selon l'une quelconque des revendications précédentes,

### Technique antérieure

Les pièces de bijouterie comportant des pierres de bijouterie, et notamment des diamants, sont obtenues en général après fixation des pierres sur un support ou sur une monture. Les pièces de bijouterie peuvent, à titre d'exemple, consister en des pièces d'horlogerie ou en des bijoux. De préférence, le procédé de fixation des pierres de bijouterie sur le support, communément appelé sertissage, doit permettre, bien entendu, de fixer durablement les pierres, mais surtout de mettre en valeur les pierres de bijouterie.

On connait différentes techniques pour monter une pierre précieuse sur un support d'une pièce de bijouterie. En particulier, la publication internationale WO 03/045184 A1 décrit un dispositif de fixation d'une pierre, notamment d'une pierre précieuse, sur une virole ayant un contour fermé polygonal et des protubérances pourvue de gorges verticales, ménagées dans lesdites protubérances sur une partie inférieure des gorges verticales. Des goupilles, engagées dans la partie inférieure des gorges ont pour fonction de supporter pour maintenir la pierre la pierre en position.

Le brevet américain US 6,105,393 décrit un mode de fixation d'une pierre précieuse sur une calotte au moyen d'éléments de connexion qui sont logés dans des évidements ménagés dans le support de la pierre et maintiennent la pierre au niveau de sa ceinture périphérique.

La demande de brevet américain US 2003/0154740 A1 décrit une bague portant une pluralité de pierres qui sont montées sur des bras pourvus d'encoches horizontales opposées dans lesquelles sont engagées deux bords diamétralement opposés de chacune des pierres.

La publication JP 2007268242 A décrit un procédé de fixation d'une pierre de bijouterie dans un support. Le support comporte une zone de réception permettant de recevoir la culasse de la pierre de bijouterie, ainsi que quatre trous traversants permettant de recevoir l'extrémité inférieure d'un clou. Pour fixer le diamant au support et former la pièce de bijouterie, on place la culasse de la pierre de bijouterie dans la zone de réception du support. Puis, on insère quatre clous respectivement dans les quatre trous jusqu'à ce que leurs extrémités supérieures respectives viennent en butée contre la couronne de la pierre de bijouterie. Enfin, l'on courbe l'extrémité inférieure des clous qui débouche à l'arrière du support pour fixer chaque clou au support. Une telle méthode présente l'inconvénient de noyer la culasse de la pierre dans le support et de cacher une partie importante de la couronne. Il en résulte que la pièce de bijouterie ainsi obtenue ne présente pas une esthétique satisfaisante.

La publication JP 2010269003 A décrit un autre procédé de fixation de pierres de bijouterie. Le support est en cire et comporte plusieurs zones de réception permettant de recevoir respectivement une pierre de bijouterie. Chaque zone de réception est entourée de six trous borgnes permettant de recevoir des clous. Par conséquent, un même clou peut contribuer à la fixation de deux pierres voisines. Pour fixer les pierres au support en cire, on dispose les pierres par leur culasse dans leur zone de réception respective. On les fixe en insérant la partie inférieure des clous dans les trous borgnes et en rabattant les griffes des clous au niveau de la couronne, avec un poinçon. Comme dans l'exemple précédent, l'esthétique de la pièce de bijouterie n'est pas optimale car la culasse n'est pas visible et une partie de la couronne est cachée.
Les inconvénients de tels procédés de sertissage de pierres sur un support pour former une pièce de bijouterie consistent à la fois en la difficulté d'assurer une fixation solide et durable de la pierre sur le support et de mettre en valeur les pierres dans leur ensemble. Les techniques connues ne permettent pas de résoudre ces problèmes de manière satisfaisante.

### Exposé de l'invention

La présente invention vise à pallier les inconvénients ci-dessus en proposant une pièce de bijouterie et son procédé de sertissage permettant de mettre en valeur les pierres de bijouterie en les rendant plus visibles, tout en proposant un procédé de sertissage fiable et rapide à mettre en oeuvre notamment pour des pièces de bijouterie comportant une pluralité de pierres.

Dans ce but, l'invention concerne une pièce de bijouterie telle que définie dans la revendication 1, ainsi qu'un procédé de sertissage comme défini par la revendication 14.

### Description sommaire des dessins

La présente invention et ses avantages apparaîtront mieux dans la description suivante de plusieurs modes de réalisation donnés à titre d'exemples non limitatifs, en référence aux dessins annexés, dans lesquels :
- la figure 1 représente une vue en perspective d'une pièce de bijouterie selon une première variante de l'invention,
- la figure 2 est une vue en coupe d'une portion de la pièce de bijouterie de la figure 1,
- la figure 3 représente une vue en perspective d'une pièce de bijouterie selon une seconde variante de l'invention, et
- la figure 4 est une vue en coupe d'une portion de la pièce de bijouterie de la figure 3.

### Illustrations et meilleures manières de réaliser l'invention

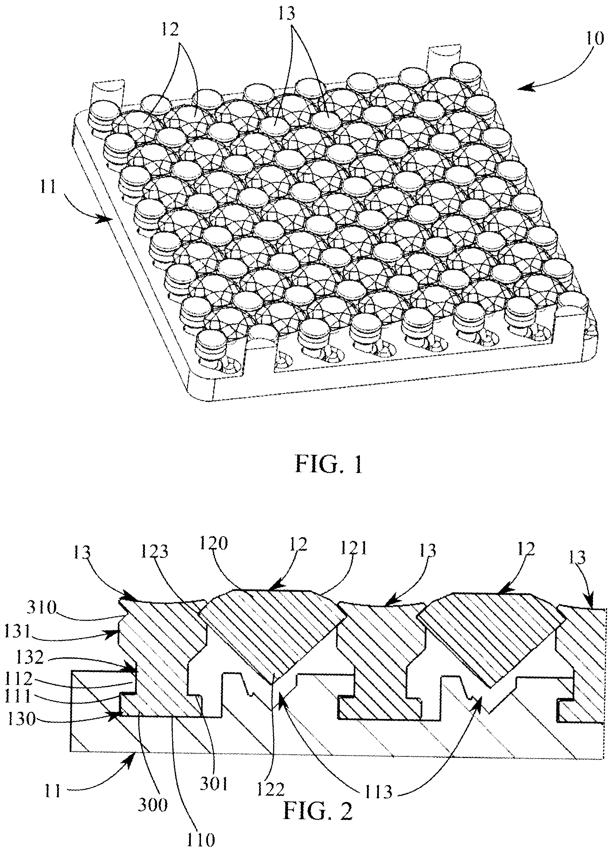

En référence aux figures 1 à 4, la présente invention concerne une pièce de bijouterie 10, 10' qui comporte un support 11 et une ou plusieurs pierres de bijouterie 12, 12'. La pièce de bijouterie 10, 10' peut être à titre d'exemple une pièce d'horlogerie ou un bijou. La pierre de bijouterie 12, 12' est couplée au support 11 par l'intermédiaire de plots de fixation 13, 13' de façon à mettre en valeur les pierres de bijouterie 12, 12'.

La pierre de bijouterie 12, 12' appelée dans la suite de la description « pierre » 12, 12' peut consister en une pierre en matière synthétique ou naturelle. La pierre 12, 12' peut, par exemple, consister en un diamant rond à facettes. La pierre 12, 12' est destinée à orner la pièce de bijouterie 10. Elle comporte une partie frontale qui est communément appelée couronne 120. La couronne 120 est visible lorsqu'elle est fixée sur le support 11 et apporte l'esthétique et l'éclat à la pièce de bijouterie 10, 10'. En outre, elle peut comporter plusieurs facettes 121 dont le nombre est variable selon le type de taille. La pierre 12, 12' comporte également une partie dorsale, appelée culasse 122, disposée à l'arrière de la couronne 120. La culasse 122 est généralement taillée en forme de pointe. En outre, la couronne 120 et la culasse 122 sont délimitées l'une de l'autre par une partie intermédiaire qui est communément appelée rondiste 123. Les pierres 12, 12' peuvent avoir des diamètres différents donc des hauteurs différentes. On appellera première pierre 12 et deuxième pierre 12' des pierres de diamètres différents, avec le diamètre de la première pierre 12 inférieur au diamètre de la deuxième pierre 12'. Bien entendu, il est possible de sertir de multiples pierres ayant chacune des diamètres différents.

De manière générale, le plot de fixation 13 présente une section circulaire, sans que cette forme de section ne soit limitative et comporte une partie inférieure 130 et une partie supérieure 131. Dans les exemples illustrés aux figures 1 à 4, le plot de fixation 13 comporte en outre une partie intermédiaire 132 qui sépare la partie inférieure 130 de la partie supérieure 131. Selon un premier mode de réalisation, le plot de fixation appelé premier plot de fixation 13, tel que représenté aux figures 1 à 2, présente une partie inférieure 130 comportant une embase 300 agencée pour être disposée dans une réservation 110 du support 11. La partie intermédiaire 132 présente une section rétrécie par rapport à la section de la partie inférieure 130, de sorte que l'embase 300 est saillante et reliée à la partie intermédiaire 132 par un épaulement 301. La partie supérieure 131 du premier plot de fixation 13 comporte une section agrandie par rapport à la section de la partie intermédiaire 132. Elle est pourvue d'une encoche 310 formant une première zone de réception, cette première encoche 310 pouvant être annulaire ou sectorielle. Dans l'exemple représenté aux figures 1 et 2, l'encoche 310 présente une section en forme de V. Bien entendu, cette forme n'est pas limitée à cet exemple et s'étend à toute section de forme complémentaire à une partie périphérique de la première pierre 12 que l'on souhaite couplée au premier plot de fixation 13. En effet, la première zone de réception 310 doit de préférence présenter une forme complémentaire d'une partie du rondiste 123 de la première pierre 12 pour permettre d'encastrer une partie périphérique de la pierre 12 dans la première zone de réception 310. Dans le cas d'une pièce de bijouterie 10 présentant une pluralité de premières pierres 12 comme illustré aux figures 1 et 2, on détermine le diamètre D de la section de la partie supérieure 131 du premier plot de fixation 13 et plus particulièrement le diamètre au niveau D' de la première zone de réception 310 du premier plot de fixation 13, en fonction de l'écartement souhaité entre deux premières pierres 12 adjacentes.

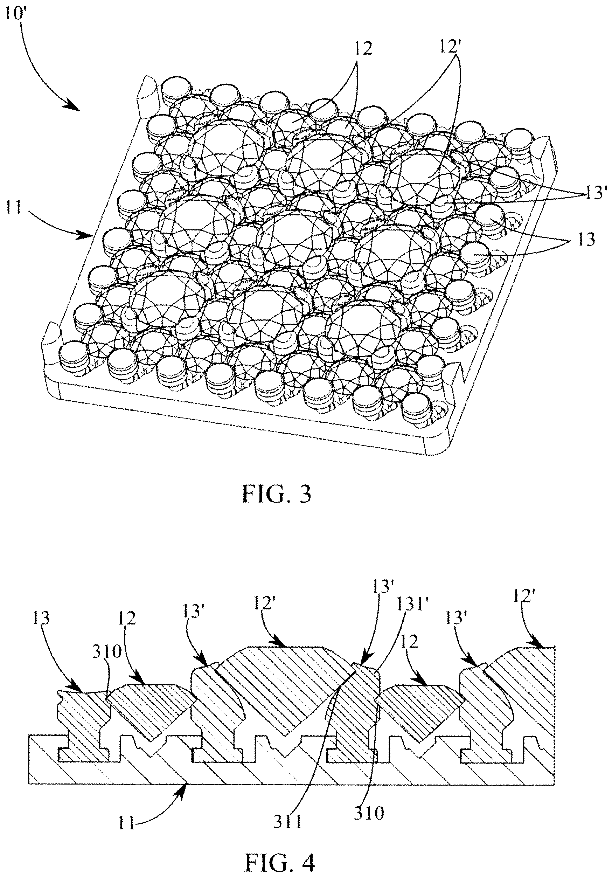

Dans l'exemple représenté aux figures 3 et 4, la pièce de bijouterie 10' comporte également une seconde variante de plot de fixation 13' appelé second plot de fixation 13' dont la partie supérieure 131' diffère de celle de la du premier plot de fixation 13. Le second plot de fixation 13' diffère uniquement du premier plot de fixation 13 en ce qu'il comporte un prolongement dans sa partie supérieure 131' qui comporte une seconde zone de réception 311. Elle se présente sous la forme d'une encoche 311 permettant de recevoir le rondiste 123 d'une deuxième pierre 12', cette seconde encoche 311 pouvant être annulaire ou sectorielle par exemple semi-cylindrique. Les plots de fixation 13 et 13' sont de préférence en métal ou en alliage, comme par exemple en acier ou en or. Ils peuvent également être réalisés dans un matériau polymère transparent, comme du polycarbonate, qui peut être obtenu par micro-injection.

Dans une troisième variante non représentée, le plot de fixation comporte seulement une partie inférieure et une partie supérieure. A l'inverse des deux variantes de réalisation précédente, le plot de fixation ne comporte pas de partie intermédiaire. Dans cette variante, la partie inférieure du plot de fixation présente une section rétrécie par rapport à la section de la partie supérieure. De préférence, la partie inférieure présente une forme cylindrique. La forme de la partie supérieure du plot de fixation reste inchangée par rapport aux variantes précédentes.

Le support 11 de la pièce de bijouterie 10 comporte des réservations 110 qui permettent de recevoir en partie les premier et/ou second plots de fixation 13, 13'. Plus particulièrement, le support 11 est muni d'une série de réservations 110 uniformément réparties sur l'ensemble de la surface du support 11 et qui délimite une série de zones de montage 113 agencées pour être recouvertes par des première et/ou deuxième pierres 12, 12'. Dans les variantes de réalisation représentées aux figures 1 et 3, les réservations 110 sont réparties selon un réseau carré, sans que cet exemple ne soit limitatif. Dans ces variantes, les réservations 110 présentent une forme particulière qui est adaptée à la forme de la partie inférieure 130 du premier ou second plot de fixation 13, 13' et qui définit une ouverture des premier et/ou second plots de fixations 13, 13', dans laquelle le premier ou second plot de fixation 13, 13' peut être librement introduit et retiré. En outre, une zone de verrouillage est également prévue dans laquelle le premier ou second plot de fixation 13, 13' est bloqué en position lorsqu'il sertit une première ou deuxième pierre 12, 12'. Plus particulièrement, la réservation 110 présente dans ces variantes une forme oblongue dont une extrémité comporte un logement 111 délimité par un rebord 112 pour former la zone de verrouillage. Toutefois, cette forme oblongue n'est pas limitative. Le logement 111 comporte une section complémentaire à celle de l'embase 300. En outre, le bord 112 définit une surface d'appui en L qui épouse l'épaulement 301 et la surface correspondante de la partie intermédiaire 132. Il en résulte que le premier ou second plot de fixation 13, 13' peut être inséré librement dans une des réservations 110 du support 11, puis peut être coulissé vers le logement 111 pour être verrouillé en position dans la direction axiale du premier ou second plot de fixation 13, 13'.

Toutefois, dans une autre variante non représentée du support, la réservation peut présenter une forme complémentaire de la partie inférieure du plot de fixation. Dans ce cas, la réservation ne comporte pas de logement pour former une zone de verrouillage. Le plot de fixation est inséré par sa partie inférieure dans la réservation et y est soudé. La fixation du plot de fixation au support peut être réalisée par soudure laser, par exemple, ou par tout autre moyen équivalent. Il en résulte que l'on verrouille les plots de fixation par un verrouillage par soudure et non pas par un verrouillage mécanique. De préférence, on utilisera dans ce cas le plot de fixation décrit selon la troisième variante non représentée.

La pièce de bijouterie 10 représentée à la figure 1 comporte une série de premières pierres 12 formant un pavage périodique. Chaque première pierre 12 est disposée dans cette réalisation, au centre de quatre premier plots de fixation 13 fixés au support 11. Les quatre premiers plots de fixation 13 sont répartis aux quatre coins d'un carré délimitant la zone de montage 113 et la première pierre 12 est disposée au centre de ce carré dans la zone de montage 113. Plus particulièrement, les quatre premiers plots de fixation 13 ont une hauteur telle qu'ils permettent de suspendre la première pierre 12 au-dessus du support 11, sans qu'elle soit en contact avec celui-ci dans la zone de montage 113, comme le représente la figure 2. Il en résulte que la première pierre 12 est uniquement maintenue par les premiers plots de fixation 13 et que la culasse 122 de la première pierre 12 est visible. En particulier, la première pierre 12 est suspendue au niveau de son rondiste 123. En effet, comme le montre la figure 2, le rondiste 123 de la première pierre 12 est encastré dans l'encoche annulaire 310 de la partie supérieure 131 du premier plot de fixation 13. En outre, les premiers plots de fixation 13 sont verrouillés au support 11 par leur embase 300. En effet, chaque embase 300 est saillante dans le logement 111 de la réservation 110. Par conséquent, la première pierre 12 est verrouillée par les quatre premiers plots de fixation 13 et il en résulte que la pierre 12 est sertie au support 11. Comme le montrent les figures 1 et 2 pour obtenir un pavage périodique, deux premières pierres 12 adjacentes peuvent avoir un ou deux premiers plots de fixation 13 en commun.

Dans le cas où les pierres taillées présentent un rondiste de forme différente, par exemple hexagonale, le nombre des plots de fixation ne sera plus de quatre, mais de six. Néanmoins, le maintien provisoire, lors du montage de la pièce de bijouterie, d'une pierre sur le support pourra être assuré par trois plots, ce maintien étant sécurisé dès la mise en place d'un quatrième plot et la fixation finale de la pierre étant assurée par les deux derniers plots. Le procédé de montage pourra par conséquent être effectué sensiblement de la même manière que pour les pierres dont le rondiste est carré, mais la fixation finale ne sera acquise qu'après le montage des deux derniers plots.

La pièce de bijouterie 10' représentée aux figures 3 et 4 illustre une seconde variante de réalisation de l'invention. Cette pièce de bijouterie 10' est composée de pierres 12 de petit diamètre, appelées premières pierres 12 et de pierres 12' de grand diamètre, appelées deuxièmes pierres 12', comparativement les unes par rapport aux autres. Une deuxième pierre 12' est entourée de huit premières pierres 12. Quatre premières pierres 12 sont réparties aux quatre coins d'un carré qui comporte au milieu de ses côtés les quatre autres premières pierres 12, et en son centre la deuxième pierre 12' surélevée par rapport aux premières pierres 12. Les première et/ou deuxième pierres 12 et 12' sont, tout comme dans la première variante de réalisation, chacune disposées autour de quatre premier et/ou second plots de fixation 13 et/ou 13' fixés au support 11. En effet, une deuxième pierre 12' est entourée de quatre seconds plots de fixation 13'. Les quatre seconds plots de fixation 13' sont répartis au quatre coins d'un carré et la deuxième pierre 12' est disposée en son centre. Comme l'illustre la figure 4, le rondiste 123 de la deuxième pierre 12' est encastré dans l'encoche semi-cylindrique 311 formant la seconde zone de réception du second plot de fixation 13'. Les premières pierres 12 peuvent respectivement être soit disposées entre quatre seconds plots de fixation 13', si elles sont adjacentes à au moins deux deuxièmes pierres 12', soit entourées de deux premiers plots de fixation 13 et de deux seconds plots de fixation 13' ou de trois premiers plots de fixation 13 et d'un second plot de fixation 13' si elles sont adjacentes à une seule deuxième pierre 12'. Il est ainsi possible d'obtenir une pièce de bijouterie 10' comportant des pierres 12 et 12' de diamètres différents et réparties selon un pavage périodique. Il en résulte que les premières et deuxièmes pierres 12 et 12' sont visibles sur le support 11 et qu'elles sont mises en valeur étant donné que leur culasse 122 n'est pas noyée dans le support 11, ce qui améliore grandement l'esthétique de la pièce de bijouterie 10' ainsi obtenue. Bien entendu, cette variante peut être étendue à plus de deux types de pierres différentes, sous réserve d'adapter les plots de fixation.

### Possibilités d'application industrielle

Pour obtenir la pièce de bijouterie 10 selon l'invention et telle que représentée à la figure 1, l'on utilise le procédé de sertissage suivant. L'on insère trois premiers plots de fixation 13 autour d'une zone de montage 113 dans trois réservations 110 du support 11. L'on verrouille les premiers plots de fixation 13 par leur embase 300 dans les logements 111. Puis, l'on encastre une partie au moins du rondiste 123 de la première pierre 12 dans la première zone de réception 310 respective des trois premiers plots de fixation 13. L'on insère ensuite le quatrième premier plot de fixation 13 dans la réservation 110 restée libre autour de la zone de montage 113. L'on place la zone de réception 310 du quatrième premier plot de fixation 13 en appui contre le rondiste 123 de la pierre première 12 en faisant coulisser l'embase 300 du quatrième premier plot de fixation 13 dans la réservation 110, jusqu'au logement 111 pour verrouiller ledit quatrième premier plot de fixation 13 au support 11 et sertir la première pierre 12.

Pour placer une première pierre 12 adjacente dans une zone de montage 113 adjacente, on répète l'opération en insérant seulement un premier plot de fixation 13 dans une réservation 110 libre de la zone de montage 113 adjacente, puis l'on encastre une partie au moins du rondiste 123 de la première pierre 12 dans la première zone de réception 310 respective des trois premiers plots de fixation 13 disposés autour de ladite zone de montage 113 correspondante. L'on insère ensuite le quatrième premier plot de fixation 13 dans la réservation 110 restée libre dans cette zone de montage 113. L'on place la zone de réception 310 du quatrième premier plot de fixation 13 en appui contre le rondiste 123 de la première pierre 12 en faisant coulisser l'embase 300 du quatrième premier plot de fixation 13 dans la réservation 110, jusqu'au logement 111 pour verrouiller ledit quatrième premier plot de fixation 13 au support 11 et sertir la première pierre 12 adjacente. La pièce de bijouterie 10 est obtenue en répétant ces étapes.

On procède de la même manière pour la deuxième variante de réalisation selon les figures 3 et 4, en intercalant des deuxièmes pierres 12' et en utilisant des seconds plots de fixation 13' en plus des premiers plots de fixation 13.

Dans une autre variante non représentée, le procédé de sertissage est effectué par soudure et comporte les étapes suivantes. L'on insère trois premiers plots de fixation autour d'une zone de montage dans trois réservations du support. L'on verrouille les premiers plots de fixation par leur partie inférieure par soudure. Puis, l'on encastre une partie au moins du rondiste de la première pierre dans la première zone de réception respective des trois premiers plots de fixation. L'on insère ensuite le quatrième premier plot de fixation dans la réservation restée libre autour de la zone de montage. L'on place la zone de réception du quatrième premier plot de fixation en appui contre le rondiste de la pierre première. Puis l'on soude la partie inférieure du plot de fixation dans la réservation pour verrouiller ledit quatrième premier plot de fixation au support et sertir la première pierre.

Il ressort clairement de cette description que l'invention permet d'atteindre les buts fixés, à savoir sertir au moins une pierre de bijouterie à l'aide d'un procédé de sertissage facile à mettre en oeuvre et fiable, et permettant de mettre en valeur les pierres de la pièce de bijouterie.

Une variante du procédé permet d'utiliser des pierres de taille plus complexe nécessitant un nombre de plots supérieur à quatre. Dans ce cas on fixe provisoirement la pierre au moyen de quatre plots dont la position est choisie pour assurer le maintien en position de la pierre et on fixe les autres plots par la suite.

La présente invention n'est pas limitée aux exemples de réalisation décrits mais s'étend à toute modification et variante évidentes pour un homme du métier.

## Revendications

1. Pièce de bijouterie (10, 10') comportant un support (11) et une pluralité de pierres de bijouterie (12, 12'), constituées de pierres taillées, comportant chacune une partie frontale visible, appelée couronne (120), et une partie dorsale, appelée culasse (122) disposée à l'arrière de ladite couronne (120) et délimitée par rapport à cette couronne (120) par une partie intermédiaire appelée rondiste (123), lesdites pierres taillées étant couplées chacune par l'intermédiaire d'au moins quatre plots de fixation (13, 13') audit support (11), et ledit support (11) comportant, pour chacune desdites pierres taillées, au moins quatre réservations (110) qui délimitent une zone de montage (113) de chacune desdites pierres taillées (12, 12') et qui sont agencées pour recevoir respectivement une partie inférieure (130) desdits plots de fixation (13, 13'), lesdits plots de fixation (13, 13') comportant, en outre, une partie supérieure (131) agencée pour maintenir et/ou sertir chacune desdites pierres taillées, dans laquelle chacune desdites pierres taillées (12, 12') est suspendue au-dessus dudit support (11) par lesdits plots de fixation (13, 13') sans contact direct apparent avec ledit support (11), et dans laquelle l'un desdits plots de fixation (13, 13') est commun à deux desdites pierres taillées (12, 12') adjacentes.

2. Pièce de bijouterie (10, 10') selon la revendication 1, **caractérisée en ce que** ladite pluralité de pierres de bijouterie (12, 12') est constituée de pierres taillées (12) ayant une première dimension, appelées premières pierres et de pierres taillées (12') ayant une seconde dimension appelées secondes pierres.

3. Pièce de bijouterie selon l'une des revendications 1 et 2, **caractérisée en ce que** lesdits plots de fixation (13, 13') comportent dans leur partie supérieure (131) au moins une première zone de réception (310) de forme complémentaire à une partie périphérique du rondiste (123) d'une desdites pierres taillées (12).

4. Pièce de bijouterie selon les revendications 2 et 3, **caractérisée en ce que** lesdits plots de fixation (13') comportent dans leur partie supérieure (131) au moins une seconde zone de réception (311) de forme complémentaire à une partie périphérique du rondiste (123) d'une desdites pierres secondes pierres taillées (12').

5. Pièce de bijouterie selon la revendication précédente, **caractérisée en ce que** les première et seconde zones de réception (310, 311) sont décalées en hauteur pour recevoir respectivement ladite première et ladite seconde pierre taillé (12, 12').

6. Pièce de bijouterie selon l'une des revendications 3 à 5, **caractérisée en ce que** ladite première zone de réception comporte une encoche annulaire (310).

7. Pièce de bijouterie selon la revendication 5, **caractérisée en ce que** ladite seconde zone de réception comporte une encoche semi-cylindrique (311).

8. Pièce de bijouterie selon la revendication 1, **caractérisée en ce que** la partie inférieure (130) desdits plots de fixation (13, 13') présente une section rétrécie par rapport à la section de la partie supérieure.

9. Pièce de bijouterie selon la revendication 1, **caractérisée en ce que** lesdites réservations (110) prévues dans le support (11) présentent une forme complémentaire de ladite partie inférieure (130) pour recevoir lesdits plots de fixation (13, 13') dans ledit support (11).

10. Pièce de bijouterie selon l'une des revendications 1 à 9, **caractérisée en ce que** la partie supérieure (131) desdits plots de fixation (13, 13') est séparée de la partie inférieure (130) par une partie intermédiaire (132) de section rétrécie et **en ce que** la partie inférieure (130) comporte une embase (300) délimitée par un épaulement (301).

11. Pièce de bijouterie selon la revendication 9, **caractérisée en ce que** lesdites réservations (110) prévues dans le support (11) comportent une ouverture pour recevoir librement lesdits plots de fixation (13, 13'), suivie d'un logement (111) de section complémentaire à ladite embase (300) pour verrouiller lesdits plots de fixation (13, 13') dans ledit support (11).

12. Pièce de bijouterie selon l'une des revendications précédentes, **caractérisée en ce que** deux desdits plots de fixation (13, 13') sont communs à deux pierres taillées (12, 12') adjacentes.

13. Pièce de bijouterie selon la revendication 2, **caractérisée en ce que** deux première pierres taillées et/ou seconde pierres taillées (12, 12') adjacentes sont maintenues chacune par quatre plots de fixation (13, 13') et **en ce qu'**au moins un des plots de fixation (13, 13') est commun à deux première et/ou secondes pierres taillées (12, 12') adjacentes.

14. Procédé de sertissage d'au moins une pièce de bijouterie (102, 10') selon l'une des revendications précédentes dans lequel l'on insère trois desdits plots de fixation (13, 13') dans lesdites réservations (110) respectives d'une zone de montage (113) et on les verrouille auxdites réservations, dans lequel on encastre une partie au moins du rondiste (123) de ladite pierre taillée (12, 12') dans une zone de réception (310, 311) que comporte lesdits plots de fixation (13, 13'), dans lequel on insère ensuite un quatrième plot de fixation (13, 13') dans une réservation (110) restée libre de la zone de montage (113) dudit support (11) pour qu'une zone de réception (310, 311) que comporte ledit quatrième plot de fixation (13, 13') soit en appui contre le rondiste (123) de ladite pierre taillée (12, 12') et dans lequel on verrouille ledit quatrième plot de fixation (13, 13') audit support (11) pour sertir ladite pierre taillée (12, 12').

15. Procédé de sertissage selon la revendication 14, **caractérisé en ce que** l'on soude la partie inférieure (130) de chaque plot de fixation (13, 13') à la réservation (110) du support (11) correspondante pour les verrouiller audit support (11).

16. Procédé de sertissage selon la revendication 14, **caractérisé en ce que** l'on insère trois desdits plots de fixation (13, 13') dans lesdites réservations (110) respectives d'une zone de montage (113), **en ce que** l'on encastre une partie au moins du rondiste (123) de ladite pierre taillée (12, 12') dans ladite zone de réception (310, 311) desdits plots de fixation (13, 13'), et **en ce que** l'on insère ensuite un quatrième plot de fixation (13, 13') dans une réservation (110) restée libre de la zone de montage (113) dudit support (11) et on coulisse ledit quatrième plot de fixation (13, 13') jusqu'à ce qu'une embase (300) que comporte ledit plot de fixation (13, 13') entre dans le logement (111) pour que ladite zone de réception (310) dudit quatrième plot de fixation (13, 13') soit en appui contre le rondiste (123) de ladite pierre taillée (12, 12') pour verrouiller ledit quatrième plot de fixation (13, 13') audit support (11) et sertir ladite pierre taillée (12, 12').

17. Procédé selon la revendication 16, **caractérisé en ce que** l'on insère un plot de fixation (13) dans une réservation (110) libre d'une zone de montage (113) adjacente comportant deux plots de fixation communs (13, 13'), **en ce que** l'on encastre une partie au moins du rondiste (123) d'une pierre taillée adjacente (12, 12') dans ladite zone de réception (310) de trois plots de fixation (13, 13'), **en ce que** l'on insère un quatrième plot de fixation (13, 13') dans une réservation (110) restée libre dans ladite zone de montage (113), l'on coulisse ledit quatrième plot de fixation (13, 13') jusqu'à ce que ladite embase (300) entre dans le logement (111) pour que ladite zone de réception (310, 311) dudit quatrième plot de fixation (13, 13') soit en appui contre le rondiste (123) de ladite pierre taillée adjacente (12, 12') pour verrouiller ledit quatrième plot de fixation (13, 13') audit support (11) et sertir ladite pierre taillée adjacente (12, 12').

18. Procédé de sertissage selon la revendication 14, dans lequel au moins une desdites pierres taillées (12, 12') a un rondiste (123) dont la forme impose un nombre de plots de fixation (13, 13') supérieur à quatre, **caractérisé en ce que** l'on effectue le montage de ladite au moins une pierre taillée (12, 12') en assurant son maintien provisoire au moyen de trois plots de fixation (13, 13'), **en ce que** l'on sécurise ce maintien au moyen d'un quatrième plot de fixation (13, 13') et **en ce que** l'on fixe définitivement ladite pierre taillée (12, 12') au moyen des plots de fixation (13, 13') correspondants restants.

## Patentansprüche

1. Schmuckstück (10, 10'), aufweisend eine Grundplatte (11) und eine Vielzahl von Schmucksteinen (12, 12'), gebildet von geschliffenen Steinen, aufweisend jeweils eine sichtbare Front, bezeichnet als Oberteil (120), und einen Rücken, bezeichnet als Steinkörper (122), der hinter dem Oberteil (120) angeordnet und in Bezug auf dieses Oberteil (120) von einem Übergangsteil, bezeichnet als Rondiste (123), begrenzt ist, wobei die geschliffenen Steine jeweils mit Hilfe von mindestens vier Befestigungsstiften (13, 13') an der Grundplatte (11) befestigt sind, und wobei die Grundplatte (11) für jeden der geschliffenen Steine, mindestens vier Aussparungen (110) aufweist, die eine Montagezone (113) jedes der geschliffenen Steinen (12, 12') begrenzen und die ausgebildet sind, um jeweils einen unteren Teil (130) der Befestigungsstifte (13, 13') aufzunehmen, wobei die Befestigungsstifte (13, 13') ferner einen oberen Teil (131) aufweisen, der ausgebildet ist, um jeden der geschliffenen Steine zu halten und/oder zu fassen, wobei jeder der geschliffenen Steinen (12, 12') über der Grundplatte (11) von den Befestigungsstiften (13, 13') ohne direkten offensichtlichen Kontakt mit der Grundplatte (11) aufgehängt ist, und wobei einer der Befestigungsstifte (13, 13') zwei der benachbarten geschliffenen Steine (12, 12') gemeinsam ist.

2. Schmuckstück (10, 10') nach Anspruch 1, **dadurch gekennzeichnet, dass** die Vielzahl von Schmucksteinen (12, 12') von geschliffenen Steinen (12) gebildet ist, die eine erste Größe haben, bezeichnet als erste Steine, und von geschliffenen Steinen (12'), die eine zweite Größe haben, bezeichnet als zweite Steine.

3. Schmuckstück nach einem der Ansprüche 1 und 2, **dadurch gekennzeichnet, dass** die Befestigungsstifte (13, 13') in ihrem oberen Teil (131) mindestens einen ersten Aufnahmebereich (310) komplementärer Form zu einem Umfangsteil der Rondiste (123) eines der ersten geschliffenen Steine (12) aufweisen.

4. Schmuckstück nach den Ansprüchen 2 und 3, **dadurch gekennzeichnet, dass** die Befestigungsstifte (13') in ihrem oberen Teil (131) mindestens einen zweiten Aufnahmebereich (311) komplementärer Form zu einem Umfangsteil der Rondiste (123) eines der zweiten geschliffenen Steine (12') aufweisen.

5. Schmuckstück nach vorangehendem Anspruch, **dadurch gekennzeichnet, dass** der erste und zweite Aufnahmebereich (310, 311) in der Höhe versetzt sind, um jeweils den ersten und den zweiten geschliffenen Stein (12, 12') aufzunehmen.

6. Schmuckstück nach einem der Ansprüche 3 bis 5, **dadurch gekennzeichnet, dass** der erste Aufnahmebereich eine ringförmige Nut (310) aufweist.

7. Schmuckstück nach Anspruch 5, **dadurch gekennzeichnet, dass** der zweite Aufnahmebereich eine halbzylindrische Nut (311) aufweist.

8. Schmuckstück nach Anspruch 1, **dadurch gekennzeichnet, dass** der untere Teil (130) der Befestigungsstifte (13, 13') einen in Bezug zum Querschnitt des oberen Teils verengten Querschnitt aufweist.

9. Schmuckstück nach Anspruch 1, **dadurch gekennzeichnet, dass** die in der Grundplatte (11) vorgesehenen Aussparungen (110) eine komplementäre Form des unteren Teils (130) aufweisen, um die Befestigungsstifte (13, 13') in der Grundplatte (11) aufzunehmen.

10. Schmuckstück nach einem der Ansprüche 1 bis 9, **dadurch gekennzeichnet, dass** der obere Teil (131) der Befestigungsstifte (13, 13') vom unteren Teil (130) durch einen Übergangsteil (132) mit verengtem Querschnitt getrennt ist und dass der untere Teil (130) eine Basis (300) aufweist, die von einem Absatz (301) begrenzt ist.

11. Schmuckstück nach Anspruch 9, **dadurch gekennzeichnet, dass** die in der Grundplatte (11) vorgesehenen Aussparungen (110) eine Öffnung aufweisen, um die Befestigungsstifte (13, 13') frei aufzunehmen, gefolgt von einer Aufnahme (111) mit einem zu der Basis (300) komplementären Querschnitt, um die Befestigungsstifte (13, 13') in der Grundplatte (11) zu verriegeln.

12. Schmuckstück nach einem der vorangehenden Ansprüche, **dadurch gekennzeichnet, dass** zwei Befestigungsstifte (13, 13') zwei benachbarten geschliffenen Steinen (12, 12') gemeinsam sind.

13. Schmuckstück nach Anspruch 2, **dadurch gekennzeichnet, dass** zwei benachbarte erste geschliffene Steine und/oder zweite geschliffene Steine (12, 12') jeweils von vier Befestigungsstiften (13, 13') gehalten werden und dass mindestens einer der Befestigungsstifte (13, 13') zwei benachbarten ersten und/oder zweiten geschliffenen Steinen (12, 12') gemeinsam ist.

14. Verfahren zum Fassen von mindestens einem Schmuckstück (102, 10') nach einem der vorangehenden Ansprüche, wobei drei der Befestigungsstifte (13, 13') in die jeweiligen Aussparungen (110) einer Montagezone (113) eingesetzt und mit den Aussparungen verriegelt werden, wobei mindestens ein Teil der Rondiste (123) des geschliffenen Steins (12, 12') in einen Aufnahmebereich (310, 311) eingepasst wird, der die Befestigungsstifte (13, 13') aufweist, wobei danach ein vierter Befestigungsstift (13, 13') in eine frei gebliebene Aussparung (110) der Montagezone (113) der Grundplatte (11) eingesetzt wird, damit sich ein Aufnahmebereich (310, 311), der den vierten Befestigungsstift (13, 13') aufweist, an der Rondiste (123) des geschliffenen Steins (12, 12') abstützt, und wobei der vierte Befestigungsstift (13, 13') an der Grundplatte (11) verriegelt wird, um den geschliffenen Stein (12, 12') zu fassen.

15. Verfahren zum Fassen nach Anspruch 14, **dadurch gekennzeichnet, dass** der untere Teil (130) jedes Befestigungsstifts (13, 13') mit der entsprechenden Aussparung (110) der Grundplatte (11) verschweißt wird, um sie mit der Grundplatte (11) zu verriegeln.

16. Verfahren zum Fassen nach Anspruch 14, **dadurch gekennzeichnet, dass** drei der Befestigungsstifte (13, 13') in die jeweiligen Aussparungen (110) einer Montagezone (113) eingesetzt werden, dass mindestens ein Teil der Rondiste (123) des geschliffenen Steins (12, 12') in den Aufnahmebereich (310, 311) der Befestigungsstifte (13, 13') eingepasst wird, und dass danach ein vierter Befestigungsstift (13, 13') in eine frei gebliebene Aussparung (110) der Montagezone (113) der Grundplatte (11) eingesetzt wird und der vierte Befestigungsstift (13, 13') solange verschoben wird, bis eine Basis (300), die der Befestigungsstift (13, 13') aufweist, in die Aufnahme (111) eintritt, damit sich der Aufnahmebereich (310) des vierten Befestigungsstifts (13, 13') an der Rondiste (123) des geschliffenen Steins (12, 12') abstützt, um den vierten Befestigungsstift (13, 13') an der Grundplatte (11) zu verriegeln und den geschliffenen Stein (12, 12') zu fassen.

17. Verfahren nach Anspruch 16, **dadurch gekennzeichnet, dass** ein Befestigungsstift (13) in eine freie Aussparung (110) einer benachbarten Montagezone (113) eingesetzt wird, aufweisend zwei gemeinsame Befestigungsstifte (13, 13'), dass mindestens ein Teil der Rondiste (123) eines benachbarten geschliffenen Steins (12, 12') in den Aufnahmebereich (310) von drei Befestigungsstiften (13, 13') eingepasst wird, dass ein vierter Befestigungsstift (13, 13') in eine frei gebliebene Aussparung (110) der Montagezone (113) eingesetzt wird, dass der vierte Befestigungsstift (13, 13') verschoben wird, bis die Basis (300) in die Aufnahme (111) eintritt, damit sich der Aufnahmebereich (310, 311) des vierten Befestigungsstifts (13, 13') an der Rondiste (123) des benachbarten geschliffenen Steins (12, 12') abstützt, um den vierten Befestigungsstift (13, 13') an der Grundplatte (11) zu verriegeln und den benachbarten geschliffenen Stein (12, 12') zu fassen.

18. Verfahren zum Fassen nach Anspruch 14, wobei mindestens einer der geschliffenen Steinen (12, 12') eine Rondiste (123) aufweist, deren Form eine Anzahl von Befestigungsstiften (13, 13') über vier verlangt, **dadurch gekennzeichnet, dass** die Montage des mindestens einen geschliffenen Steins (12, 12') bei Sicherung seines vorläufigen Halts mit Hilfe von drei Befestigungsstiften (13, 13') durchgeführt wird, dass dieser Halt mit Hilfe eines vierten Befestigungsstifts (13, 13') besichert wird und dass der geschliffene Stein (12, 12') endgültig mit Hilfe der entsprechenden restlichen Befestigungsstifte (13, 13') befestigt wird.

## Claims

1. A jewelry item (10, 10') comprising a support (11) and a plurality of jewelry stones (12, 12'), constituted by cut stones, each comprising a visible front part, called a crown (120), and a back part, called a pavilion (122), arranged behind said crown (120) and delimited relative to said crown (120) by an intermediate part called a girdle (123), said cut stones each being coupled via at least four fastening studs (13, 13') to said support (11), and said support (11) comprising, for each of said cut stones, at least four recesses (110) that delimit a mounting zone (113) for each of said cut stones (12, 12') and that are arranged to respectively receive a lower part (130) of said fastening studs (13, 13'), said fastening studs (13, 13') further comprising an upper part (131) arranged to maintain and/or crimp each of said cut stones, wherein each of said cut stones (12, 12') is suspended above said support (11) by said fastening studs (13, 13') without visible direct contact with said support (11), and wherein one of said fastening studs (13, 13') is common to two of said adjacent cut stones (12, 12').

2. The jewelry item (10, 10') according to claim 1, **characterized in that** said plurality of jewelry stones (12, 12') is constituted by cut stones (12) having a first dimension, called first stones, and cut stones (12') having a second dimension, called second stones.

3. The jewelry item according to one of claims 1 and 2, **characterized in that** said fastening studs (13, 13') comprise, in their upper part (131), at least one first reception zone (310) with a shape complementary to a peripheral part of the girdle (123) of one of said cut stones (12).

4. The jewelry item according to claims 2 and 3, **characterized in that** said fastening studs (13') comprise, in their upper part (131), at least one second reception zone (311) with a shape complementary to a peripheral part of the girdle (123) of one of said second cut stones (12').

5. The jewelry item according to the preceding claim, **characterized in that** the first and second receiving zones (310, 311) are offset in height so as respectively to receive said first and said second cut stones (12, 12').

6. The jewelry item according to one of claims 3 to 5, **characterized in that** said first receiving zone comprises an annular notch (310).

7. The jewelry item according to claim 5, **characterized in that** said second receiving zone comprises a semi-cylindrical notch (311).

8. The jewelry item according to claim 1, **characterized in that** the lower part (130) of said fastening studs (13, 13') has a narrower cross-section relative to the cross-section of the upper part.

9. The jewelry item according to claim 1, **characterized in that** said recesses (110) provided in the support (11) have a shape complementary to said lower part (130) to receive said fastening studs (13, 13') in said support (11).

10. The jewelry item according to one of claims 1 to 9, **characterized in that** the upper part (131) of one of said fastening studs (13, 13') is separated from the lower part (130) by an intermediate part (132) with a narrower cross-section and **in that** the lower part (130) comprises a base (300) delimited by a shoulder (301).

11. The jewelry item according to claim 9, **characterized in that** said recesses (110) provided in the support (11) comprise an opening to freely receive said fastening studs (13, 13'), followed by a housing (111) with a cross-section complementary to said base (300) to lock said fastening studs (13, 13') in said support (11).

12. The jewelry item according to any one of the preceding claims, **characterized in that** two of said fastening studs (13, 13') are common to two adjacent cut stones (12, 12').

13. The jewelry item according to claim 2, **characterized in that** two adjacent first cut stones and/or second cut stones (12, 12') are each maintained by four fastening studs (13, 13') and **in that** at least one of the fastening studs (13, 13') is shared by two first and/or second adjacent cut stones (12, 12').

14. A method for setting at least one jewelry item (102, 10') according to one of the preceding claims, wherein three of said fastening studs (13, 13') are inserted into said respective recesses (110) of a mounting zone (113) and they are locked to said recesses, wherein at least one part of the girdle (123) of said cut stone (12, 12') is fitted into a reception zone (310, 311) comprised by said fastening studs (13, 13'), wherein a fourth fastening stud (13, 13') is inserted in a recess (110) that has remained free of the mounting zone (113) of said support (11) so that a reception zone (310, 311) of said fourth fastening stud (13, 13') bears against the girdle (123) of said cut stone (12, 12') and wherein said fourth fastening stud (13, 13') is locked to said support (11) to set said cut stone (12, 12').

15. The setting method according to claim 14, **characterized in that** the lower part (130) of each fastening stud (13, 13') is welded to the recess (110) of the corresponding support (11) to lock them to said support (11).

16. The setting method according to claim 14, **characterized in that** three of said fastening studs (13, 13') are inserted in said respective recesses (110) of a mounting zone (113), **in that** at least part of the girdle (123) of said cut stone (12, 12') is fitted into said reception zone (310, 311) of said fastening studs (13, 13'), and **in that** a fourth fastening stud (13, 13') is next inserted into a recess (110) remaining free of the mounting zone (113) of said support (11) and said fourth fastening stud (13, 13') is slid until a base (300) comprised by said fastening stud (13, 13') enters the housing (111) so that said reception zone (310) of said fourth fastening stud (13, 13') bears against the girdle (123) of said cut stone (12, 12') to lock said fourth fastening stud (13, 13') to said support (11) and to set said cut stone (12, 12').

17. The method according to claim 16, **characterized in that** a fastening stud (13) is inserted into a free recess (110) of an adjacent mounting zone (113) comprising two shared fastening studs (13, 13'), **in that** at least part of the girdle (123) of an adjacent cut stone (12, 12') is fitted into said reception zone (310) of three fastening studs (13, 13'), **in that** a fourth fastening stud (13, 13') is inserted in a recess (110) remaining free in said mounting zone (113), said fourth fastening stud (13, 13') is slid until said base (300) enters the housing (111) so that said reception zone (310, 311) of said fourth fastening stud (13, 13') bears against the girdle (123) of said adjacent cut stone (12, 12') to lock said fourth fastening stud (13, 13') to said support (11) and to set said adjacent cut stone (12, 12').

18. The setting method according to claim 14, wherein at least one of said cut stones (12, 12') has a girdle (123) whereof the shape imposes a number of fastening studs (13, 13') greater than four, **characterized in that** said at least one cut stone (12, 12') is mounted while ensuring its temporary maintenance using three fastening studs (13, 13'), **in that** this maintenance is secured using a fourth fastening stud (13, 13') and **in that** said cut stone (12, 12') is permanently fastened using remaining corresponding fastening studs (13, 13').
